# EUROPÄISCHE PATENTANMELDUNG

(11) **EP 1 830 050 A2**
(43) Veröffentlichungstag der Anmeldung: **05.09.2007**
(21) Anmeldenummer: 07001691.0
(22) Anmeldetag: 26.01.2007
(51) Int. Cl.: F02B 37/24, F02B 37/12

(54) **Verfahren und Steuergerät zur Steuerung eines variablen Turbolader- Turbinenströmungsquerschnitts**

(30) Priorität: 01.03.2006 DE 102006009324
(71) Anmelder: Dr.Ing. h.c. F. Porsche Aktiengesellschaft, 70435 Stuttgart (DE)
(72) Erfinder: Sterner, Andreas, 71696 Moeglingen (DE); Hofstetter, Matthias, 77975 Ringsheim (DE)

(57) **Zusammenfassung**

Vorgestellt wird ein Verfahren zum Ansteuern eines Stellgliedes (42) zur Einstellung eines Turbinenströmungsquerschnitts eines Turboladers (36) eines Ottomotors (10) in einem Kraftfahrzeug bei einem Wechsel der Last des Ottomotors (10) von einem kleineren Lastwert auf einen größeren Lastwert. Das Verfahren zeichnet sich dadurch aus, dass das Stellglied (42) zur Einstellung des für den größeren Lastwert einzustellenden Turbinenströmungsquerschnitts gegenüber dem Wechsel der Last verzögert angesteuert wird. Ferner wird ein zur Steuerung des Ablaufs des Verfahrens eingerichtetes Steuergerät vorgestellt.

## Beschreibung

Die Erfindung betrifft sowohl ein Verfahren als auch ein Steuergerät nach dem Oberbegriff des jeweils zugehörigen unabhängigen Anspruchs. Die Erfindung betrifft damit, im Allgemeinen, eine Einstellung eines Turbinenströmungsquerschnitts eines Turboladers in einem Kraftfahrzeug bei einem Wechsel der Last des Ottomotors von einem kleineren Lastwert auf einen größeren Lastwert. Wegen der dann positiven Zeitableitung der Last kann ein solcher Lastwechsel auch als positiver Lastwechsel bezeichnet werden.

Das eingangs genannte Verfahren ist aus der Reihe "Die Bibliothek der Technik, Band 103, Abgasturbolader", Verlag Moderne Industrie, D-86895 Landsberg/Lech, ISBN 3-478-93263-7, dort Seite 40, bekannt. Diese Literaturstelle behandelt einen Turbolader mit verstellbarer Turbinengeometrie (VTG), bei dem der Turbinen-Strömungsquerschnitt durch Schließen von Leitschaufeln verkleinert wird, um ein höheres Druckgefälle zwischen dem Turbineneintritt und dem Turbinenaustritt zu erzeugen. Für eine Beschleunigung aus niedrigen Drehzahlen heraus sollen die Leitschaufeln geschlossen werden, um die maximale Energie aus dem Abgas zu gewinnen. Ferner öffnen die Schaufeln mit zunehmender Drehzahl und passen sich dem jeweiligen Betriebspunkt an.

Nach dieser Veröffentlichung wird damit insbesondere eine Erhöhung des Drehmoments bei niedrigen Drehzahlen unter stationären Bedingungen und eine spürbare Verbesserung des dynamischen Fahrverhaltens bei PKW-Dieselmotoren erzielt. Die verstellbare Turbinengeometrie trägt insbesondere dazu bei, die prinzipbedingte Verzögerung zwischen einer erhöhten Drehmomentanforderung und der Bereitstellung des erhöhten Drehmoments durch den Verbrennungsmotor, das sogenannte Turboloch (english: lag), zu verringern. In der genannten Veröffentlichung wird auch bereits eine Verwendung von Turboladern mit variabler Turbinengeometrie bei Ottomotoren genannt.

Dieses Turboloch stellt auch bei Ottomotoren eine Herausforderung für den Entwickler dar. Auch wenn Ottomotoren bisher aufgrund höherer Abgastemperaturen mit Turboladern betrieben wurden, die eine feste Turbinengeometrie aufweisen, erwartet man bei einer Verwendung von Turboladern mit variabler Turbinengeometrie bei Ottomotoren prinzipiell ebenfalls positive Auswirkungen auf den unerwünschten Turboloch-Effekt. Die bei Erprobungen beobachteten positiven Auswirkungen blieben jedoch hinter den Erwartungen zurück.

Vor diesem Hintergrund besteht die Aufgabe der Erfindung in der Angabe eines Verfahren und eines Steuergeräts der jeweils eingangs genannten Art, mit dem sich jeweils ein beschleunigter Drehmomentaufbau bei einem positiven Lastwechsel erzielen lässt.

Diese Aufgabe wird bei einem Verfahren und einem Steuergerät der jeweils eingangs genannten Art jeweils durch die kennzeichnenden Merkmale der unabhängigen Ansprüche gelöst.

Es ist auf den ersten Blick überraschend, dass die verzögerte Stellgliedansteuerung den Drehmomentaufbau bei einem positiven Lastwechsel beschleunigt. Die Erfinder haben jedoch erkannt, dass der an sich erwünschte Druckaufbau im Abgas vor der Turbine bei einer unverzögerten Ansteuerung des Stellgliedes bei einem Ottomotor aus folgendem Grund kontraproduktiv wirken kann: Im Gegensatz zum Dieselmotor, der in der Regel ungedrosselt betrieben wird, werden Ottomotoren im Teillastbereich gedrosselt betrieben.

Der Dieselmotor arbeitet in der Teillast mit Luftüberschuss. Das gewünschte Drehmoment wird über die zudosierte Kraftstoffmenge eingestellt. Es wird also bei im Wesentlichen gleicher Brennraumfüllung über die Qualität der Brennraumfüllung eingestellt. Im Ergebnis liefert der Dieselmotor daher auch im Teillastbereich, in dem er nur wenig Drehmoment erzeugt, einen vergleichsweise großen Abgasmassenstrom, der die Turbine auf Drehzahl hält. Eine schließende Ansteuerung der Leitschaufelverstellung führt dann praktisch verzögerungslos zu einer erhöhten Turbinenleistung, einem erhöhten Ladedruck und damit zu einem schnellen Anstieg der Brennraumfüllungen und des Drehmomentes des Dieselmotors.

Die Leistung des Ottomotors wird dagegen über die Menge des in den Brennräumen verbrannten Gemisches eingestellt. Bei kleinen Leistungen, also bei niedrigen Drehmomenten und/oder Drehzahlen, ergibt sich dann auch nur ein entsprechend geringer Abgasmassenstrom. Bei einem bestimmten Verbrennungsmotor schwankt die pro Stunde angesaugte Luftmasse je nach Last zwischen 24 Kg und 1400 Kg, also um fast zwei Größenordnungen. In Betriebszuständen mit niedrigen Abgasmassenströmen fällt daher die Turbinendrehzahl vergleichsweise stark ab. Eine schließende Verstellung der Leitschaufeln vergrößert dann zwar den relativen Anteil der auf die Turbine übertragenen Abgasenergie. Wegen des in absoluten Werten niedrigen Abgasmassenstroms ist damit aber noch keine große Steigerung der absoluten Turbinenleistung verbunden. Als unerwünschte Folge steigt der Ladedruck nur langsam an. Zusätzlich kann der durch das schließende Verstellen der Leitschaufeln ansteigende Abgasgegendruck auf die Brennräume zurückwirken und deren Füllung mit unverbrannter Luft oder unverbranntem Gemisch behindern.

Durch das erfindungsgemäße Verzögern der Stellgliedansteuerung kann dagegen der Abgasmassenstrom bei geöffneter Drosselklappe zunächst gesteigert werden. Wenn dann nach Ablauf der kurzen Verzögerungszeit die schließende Verstellung erfolgt, steht bereits ein gesteigerter Abgasmassenstrom zur Verfügung, so dass die auf die Turbine übertragene Abgasenergie wesentlich größer ist als bei einer unverzögerten Verstellung. Im Ergebnis steigt das vom Ottomotor bereitgestellte Drehmoment dann wesentlich schneller an als bei der unverzögerten Ansteuerung.

Die gleichen Vorteile ergeben sich für entsprechende Ausgestaltungen des Steuergeräts. Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Turbolader mit variabler Turbinengeometrie;
- Fig. 2: eine Prinzip-Darstellung der Variation der Turbinengeometrie;
- Fig. 3: zeitliche Verläufe eines Fahrerwunsches, einer Drosselklappen-Verstellung und einer Verstellung eines Turbinenströmungsquerschnitts bei einem positiven Lastwechsel; und
- Fig. 4: ein Flussdiagramm als Ausführungsbeispiel eines erfindungsgemäßen Verfahrens.

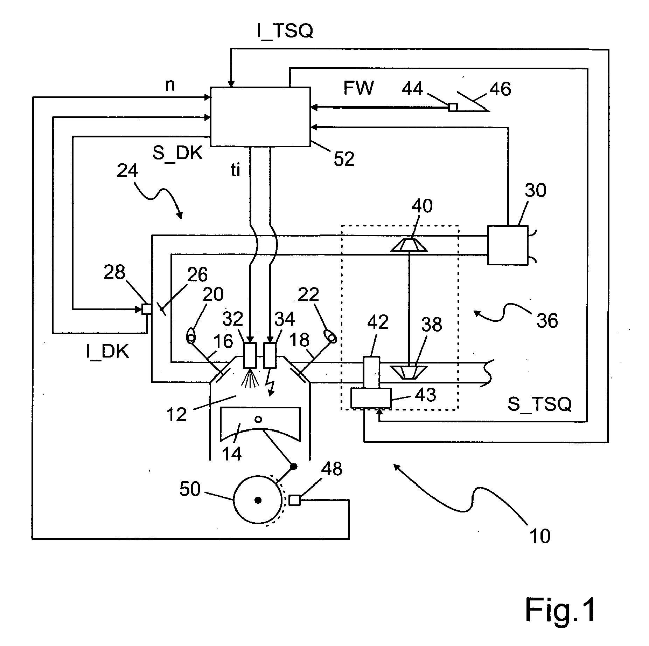

Im Einzelnen zeigt Fig. 1 einen Verbrennungsmotor 10 mit wenigstens einem Brennraum 12, der von einem Kolben 14 beweglich abgedichtet wird. Ein Wechsel von Füllungen des Brennraums 12 wird über ein Einlassventil 16 und ein Auslassventil 18 gesteuert, wobei das Einlassventil 16 von einem Einlassventilsteller.20 und das Auslassventil 18 von einem Auslassventilsteller 22 betätigt wird. Der Einlassventilsteller 20 steuert das Einlassventil 16 in einer Ausgestaltung mit einem variablen Hub und dient so als Füllungsstellglied.

Bei geöffnetem Einlassventil 16 strömt Luft oder ein Gemisch aus Luft und Brennstoff aus einem Ansaugsystem 24 in den Brennraum 12. Die Menge der einströmenden Luft oder des einströmenden Gemisches wird alternativ oder ergänzend zu einer Variation des Hubes des Einlassventils 16 über eine Drosselklappe 26 eingestellt, die durch einen Drosselklappensteller 28 betätigt wird. In jedem Fall wird die Brennraumfüllung dabei maßgeblich vom Druck vor der Drosselklappe 26 und/oder dem Einlassventil 16 als jeweiligem Füllungsstellglied beeinflusst. Der Drosselklappensteller 28 weist in einer Ausgestaltung einen integrierten Drosselklappensensor auf, der eine Information I_DK über einen Istwert des Öffnungswinkels der Drosselklappe 26 bereitstellt.

Die Brennraumfüllung wird bevorzugt aus dem Signal eines Füllungssensors 30 bestimmt, der als Luftmassenmesser oder Saugrohrdrucksensor realisiert sein kann. Es versteht sich, dass ein Saugrohrdrucksensor auch ergänzend zu einem Luftmassenmesser vorgesehen sein kann. Der Kraftstoff wird entweder in das Ansaugsystem 24 (Saugrohreinspritzung) dosiert oder durch einen Injektor 32 direkt in den Brennraum 12 eingespritzt (Direkteinspritzung).

Auf jeden Fall wird in dem Brennraum 12 eine brennfähige Brennraumfüllung erzeugt, die von einer Zündkerze 34 gezündet wird. Restgase der verbrannten Füllung des Brennraums 12 werden über das geöffnete Auslassventil 18 ausgestoßen.

Der in der Figur 1 dargestellte Verbrennungsmotor 10 weist einen Abgasturbolader 36 auf, dessen Turbinenrad 38 von den ausgestoßenen Abgasen angetrieben wird und das seinerseits ein Verdichterrad 40 im Ansaugsystem 24 antreibt. Der Abgasturbolader 36 weist ein Stellglied 42 mit einem elektrischen Antrieb 43 zur Steuerung der Geometrie des Turboladers 36 auf. Der elektrische Antrieb 43 ist typischerweise ein Elektromotor, der in Verbindung mit einer Mechanik des Stellgliedes 42 eine geradlinige oder gekrümmt verlaufende Stellbewegung erzeugt.

Drehmomentanforderungen FW eines Fahrers werden durch einen Fahrerwunschgeber 44 erfasst, der die Stellung eines Fahrpedals 46 des Kraftfahrzeugs erfasst. Ein Drehwinkelsensor 48 tastet Winkelmarkierungen eines drehfest mit einer Kurbelwelle des Verbrennungsmotors 10 verbundenen Geberrades 50 ab und liefert damit eine Information über die Winkellage und Winkelgeschwindigkeit der Kurbelwelle. Die Winkelgeschwindigkeit ist ein Maß für die Drehzahl n des Verbrennungsmotors 10.

Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 28, 30, 44, 48 aufweist. So kann das elektrische Stellglied 43 in einer Ausgestaltung eine Information I_TSQ über eine eingestellte Leitschaufelposition, also eine Lagerückmeldung für eine Regelung der Leitschaufelposition in einem geschlossenen Kreis oder ein Eigendiagnoseergebnis bereit stellen.

Zur Steuerung des Verbrennungsmotors 10 werden die Signale des integrierten Drosselklappensensors 28, des Füllungssensors 30, des Fahrerwunschgebers 44, des Drehwinkelsensors 48, die optional vorhandene Information I_TSQ und ggf. die Signale alternativer oder weiterer Sensoren von einem Motorsteuergerät 52 verarbeitet, das zur Steuerung des Ablaufs des erfindungsgemäßen Verfahrens und/oder einer oder mehrerer seiner Ausgestaltungen eingerichtet, insbesondere programmiert ist. Das Steuergerät 52 zeichnet sich insbesondere dadurch aus, dass es aus den erhaltenen Informationen und Signalen Stellsignale zur Steuerung von Funktionen des Verbrennungsmotors 10 bildet. In der Ausgestaltung der Fig. 1 sind dies im Wesentlichen Drosselklappenstellsignale S_DK und Signale S_TSQ, mit denen das Steuergerät 52 einen Turbinen-Strömungsquerschnitt TSQ steuert, sowie Einspritzimpulsbreiten ti und Zündsignale.

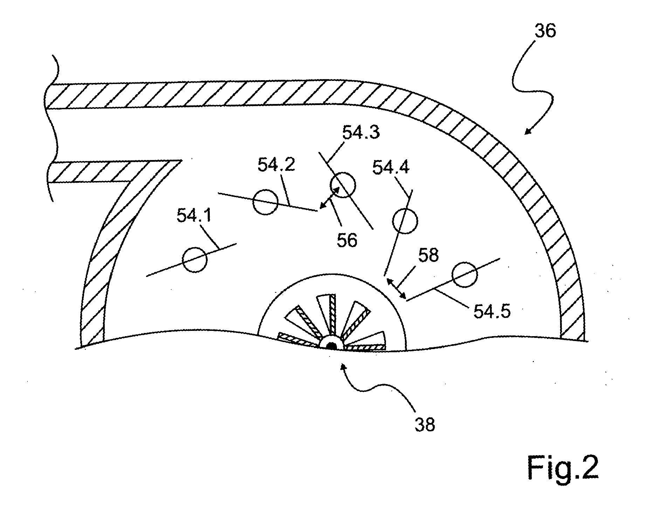

Fig. 2 zeigt eine Ausgestaltung einer Turbine eines Turboladers 36 mit ringförmig angeordneten Leitschaufeln 54.1, 54.2, 54.3, 54.4 und 54.5. Abweichend von der Realität, in der sämtliche Leitschaufeln 54.1, 54.2, 54.3, 54.4 und 54.5 gleich eingestellt werden, sind die Leitschaufeln 54.1, 54.2 und 54.2 in einer geschlossenen Stellung mit einem kleinen Strömungsquerschnitt 56 und die Leitschaufeln 54.4. und 54.5 in einer weiter offenen Stellung mit einem größeren Strömungsquerschnitt 58 dargestellt. Der Grundladedruck wird dabei mit dem größeren Strömungsquerschnitt 58 dargestellt. Die Verstellung erfolgt durch das Stellglied 42, das zum Beispiel einen mit den Leitschaufeln über bewegliche Hebel verbundenen Verstellring betätigt. Details der Mechanik sind für die Erfindung nicht wesentlich.

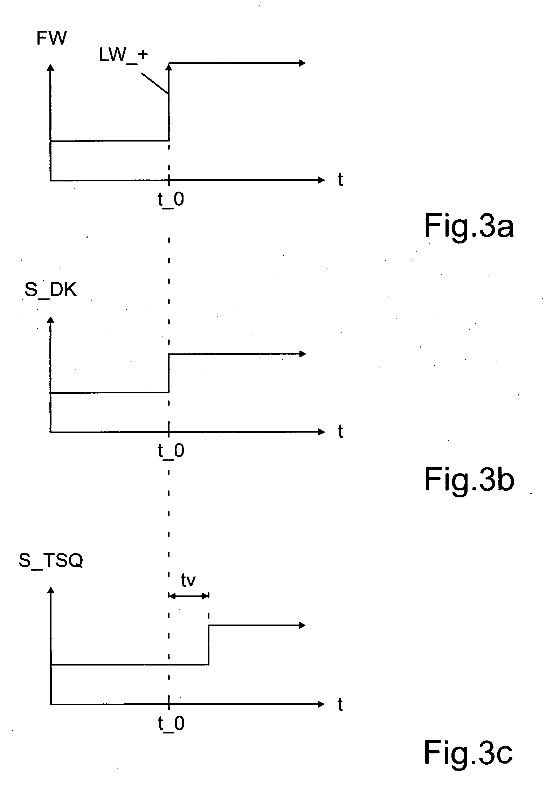

Fig. 3 zeigt zeitliche Verläufe verschiedener Betriebsparameter bei einem Ablauf einer Ausgestaltung des Verfahrens in qualitativer Form. So zeigt die Fig. 3a einen zeitlichen Verlauf eines Fahrerwunsches FW bei einem positiven Lastwechsel LW_+, der zu einem Zeitpunkt t_0 auftritt. Dabei entspricht ein hoher Wert von FW einem hohen gewünschten Drehmoment. Das Steuergerät 52 verarbeitet das Signal FW und bildet Stellsignale S_DK und S TSQ zur Erzeugung des gewünschten höheren Drehmomentes.

Zur Erzeugung des höheren Drehmomentes wird insbesondere die Drosselklappe 26 schnell geöffnet. Dies kommt in der Fig. 3b durch den unmittelbar an den positiven Lastwechsel LW_+ anschließenden Anstieg des Stellsignals S_DK zum Ausdruck, mit dem die Drosselklappe weiter geöffnet wird. Bei einer alternativen oder ergänzenden Steuerung der Brennraumfüllungen über eine Variation des Hubes des Einlassventils 16 wird entsprechend der Hub des Einlassventils vergrößert.

Dagegen erfolgt die Ausgabe des Stellsignals S TSQ, mit dem die Leitschaufeln schließend angesteuert werden, gegenüber dem positiven Lastwechsel LW_+ gesteuert verzögert, was in der Fig. 3c durch die Verzögerungszeit tv zum Ausdruck kommt, um die der Anstieg im Stellsignal S_TSQ gegenüber dem Zeitpunkt t_0 verzögert wird. Der Anstieg von S_TSQ repräsentiert eine Ansteuerung, mit der die Leitschaufeln in eine weiter geschlossene Stellung gefahren werden. Das Ansteuersignal kann dabei ein pulsweitenmoduliertes Signal sein, bei dem der Anstieg von S_TSQ eine Vergrößerung eines Tastverhältnisses angibt. Dies gilt analog für das Stellsignal S_DK der Fig. 3b.

Die bereits weiter oben erwähnte Vergrößerung des Abgasmassenstroms erfolgt während dieser Verzögerungszeit tv. Durch das vorhergehende Öffnen der Drosselklappe 26, oder allgemeiner, durch ein vorhergehendes Entdrosseln, steigt der Druck vor den Brennräumen 12 an. Als erwünschte Folge sinkt damit auch die Empfindlichkeit, mit der der Verbrennungsmotor 10 auf einen erhöhten Abgasgegendruck reagiert.

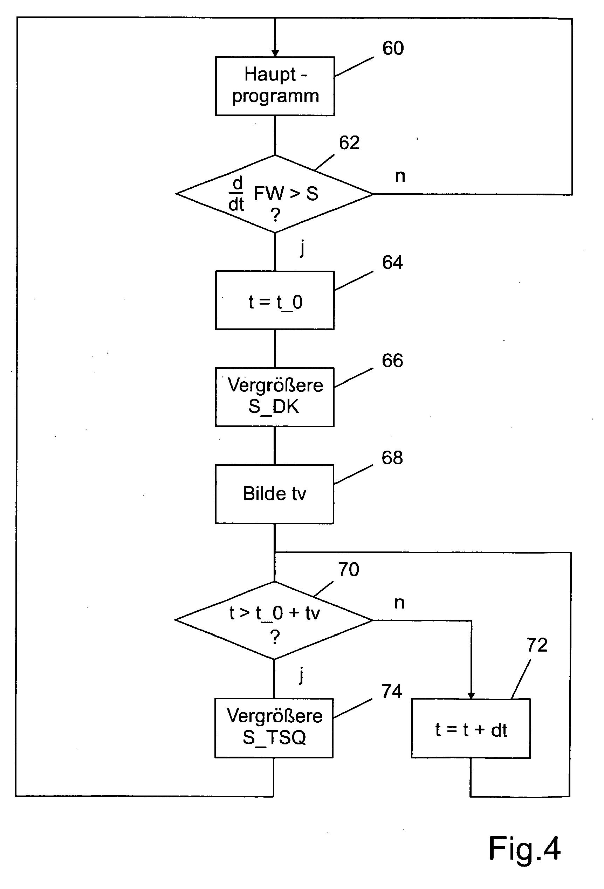

Fig. 4 zeigt ein Ausführungsbeispiel eines erfindungsgemäßen Verfahrens als Flussdiagramm eines im Steuergerät 52 ablaufenden Programms. Dabei repräsentiert der Schritt 60 ein übergeordnetes Hauptprogramm zur Steuerung des Verbrennungsmotors 10. Aus dem Hauptprogramm 60 heraus wird periodisch oder interrupt-gesteuert ein Schritt 62 erreicht, in dem eine Anforderung einer schnellen Drehmomenterhöhung erkannt wird. Dazu wird in der dargestellten Ausgestaltung eine Änderung d/dt des Signals FW des Fahrerwunschgebers 44 gebildet und mit einem Schwellenwert S verglichen.
Ist die FW-Änderung kleiner als S, kehrt das Programm ohne weitere Änderungen in das Hauptprogramm des Schritts 60 zurück. Wird der Schwellenwert S jedoch überschritten, verzweigt das Programm in einen Schritt 64, in dem ein Zeitgeber auf einen Zählwert t-0 gesetzt wird.

Anschließend gibt das Steuergerät 52 im Schritt 66 ein vergrößertes Stellsignal S_DK aus, mit dem die Drosselklappe 26 weiter geöffnet wird. Im Schritt 68 erfolgt dann eine Festlegung einer Verzögerungszeitspanne tv. Die Verzögerungszeitspanne tv entspricht typischerweise der Zeitdauer einiger weniger Arbeitsspiele des Verbrennungsmotors 10, in denen zum Beispiel 2-10 vergrößerte Brennraumfüllungen ausgestoßen werden. Der Verbrennungsmotors 10 wird dann während der Verzögerungszeitspanne tv mit vergrößertem Signal S_DK, aber noch nicht vergrößertem Signal S_TSQ betrieben.

Im Schritt 70 wird überprüft, ob die seit dem Zeitpunkt t = t_0 verstrichene Zeit t den festgelegten Wert für die Verzögerungszeitspanne tv überschreitet. Solange dies nicht der Fall ist, wird eine Schleife aus dem Schritt 70 und einem Schritt 72 durchlaufen, in dem der Wert der Zeit t sukzessive um Inkremente dt erhöht wird. Erst wenn t den Wert tv überschreitet, wird die Schleife aus den Schritten 70 und 72 verlassen und ein Schritt 74 erreicht, in dem jetzt auch ein geändertes Stellsignal S_TSQ ausgegeben wird, mit dem der Turbinenströmungsquerschnitt TSQ für eine Realisierung des Fahrerwunsches nach einem schnell steigenden Drehmoment vorübergehend verringert wird.

Im Folgenden werden weitere Ausgestaltungen des Verfahrens vorgestellt: Die Länge der Verzögerungszeitspanne tv kann in einer einfachen Ausgestaltung des Schritts 68 als Festwert vorgegeben werden. Es ist jedoch bevorzugt, dass das Ausmaß der Verzögerung, also die Länge der Zeitspanne tv, in Abhängigkeit von wenigstens einem Betriebsparameter des Verbrennungsmotors vorgegeben wird. Als Betriebsparameter kommt dazu insbesondere die Drehzahl n des Verbrennungsmotors bei dem positiven Lastwechsel LW_+ in Frage. Je höher die Drehzahl n ist, desto größer ist der Abgasmassenstrom als Größe, die zur Zahl der pro Zeiteinheit erzeugten verbrannten Brennraumfüllungen proportional ist.

Bei einem bestimmten Verbrennungsmotor hat sich zum Beispiel eine Verzögerungszeitspanne von 200 ms bei n = 2000 min⁻¹ und eine Verzögerungszeitspanne von 50 ms bei n = 6000 min⁻¹ als optimal herausgestellt. Bei einem 6-Zylindermotor mit je einem Turbolader für je drei Zylinder werden zum Beispiel in den genannten 50 ms Abgase von (50*3*6000)/(1000 * 60), also von 7 bis 8 Brennraumfüllungen ausgestoßen. Im Allgemeinen wird das Ausmaß der Verzögerung bei einem kleineren Wert der Drehzahl n auf größere Werte festgelegt als bei einem größeren Wert der Drehzahl.

Der Abgasmassenstrom ist jedoch nicht nur von der Zahl der Brennraumfüllungen pro Zeiteinheit, sondern auch von der Größe der einzelnen Brennraumfüllungen abhängig. In einer weiteren bevorzugten Ausgestaltung berücksichtigt das Steuergerät 52 bei der Festlegung des Werts der Verzögerungszeitspanne tv im Schritt 68 eine Last des Verbrennungsmotors vor dem positiven Lastwechsel LW_+ als weiteren Betriebsparameter. Dabei wird das Ausmaß der Verzögerung tv bei einem kleineren Wert der Last auf größere Werte festgelegt als bei einem größeren Wert.

Eine weitere bevorzugte Ausgestaltung sieht vor, dass nach einem positiven Lastwechsel LW_+ ein Maß für den Abgasmassenstrom durch die Turbine gebildet wird. Die Ausgabe des geänderten Stellsignals S_TSQ unterbleibt in dieser Ausgestaltung solange, bis das Maß für den Abgasmassenstrom eine vorbestimmten Schwellenwert überschreitet. Mit anderen Worten: In der Fig. 4 entfällt Schritt 64. Dafür wird im Schritt 68 ein Schwellenwert für den Abgasmassenstrom gebildet und im Schritt 70 mit einem aktuellen Wert des Abgasmassenstroms verglichen, der im Schritt 72 wiederholt aktualisiert wird. Der Abgasmassenstrom ergibt sich zum Beispiel als zur Drehzahl und Brennraumfüllung proportionale Größe.

Im Rahmen einer weiteren Ausgestaltung wird als weiterer Betriebsparameter ein Druckgefälle über der Drosselklappe 26 des Verbrennungsmotors 10 bei einem positiven Lastwechsel LW_+ berücksichtigt. Dabei wird das Ausmaß der Verzögerung, also die Größe oder Länge der Verzögerungszeitspanne tv, im Schritt 68 bei einem kleineren Wert des Druckgefälles auf kleinere Werte festgelegt als bei einem größeren Wert des Druckgefälles.

Das Druckgefälle kann durch Messung der Drücke vor und hinter der Drosselklappe 26 ermittelt werden. Alternativ kann es auch aus anderen Messgrößen mit Hilfe eines Rechenmodells ermittelt werden. So korreliert zum Beispiel ein Wertepaar aus einem gemessenen Drosselklappenöffnungswinkel und einem gemessenen Ansaugluftmassenstrom bei einer bestimmten Temperatur mit einem bestimmten Wert des Druckgefälles.

Eine weitere Ausgestaltung sieht vor, dass eine Abgastemperatur als weiterer Betriebsparameter bei der Festlegung des Wertes der Verzögerungszeitspanne tv berücksichtigt wird. Die Abgastemperatur kann ebenfalls gemessen oder modelliert werden. Dabei wird das Ausmaß der Verzögerung tv bei einem kleineren Wert der Abgastemperatur auf einen größeren Wert festgelegt als bei einem größeren Wert der Drehzahl.

Weitere Ausgestaltungen sehen vor, dass der Betriebsparameter ein von der Umgebung des Verbrennungsmotors abhängiger Betriebsparameter ist. Dafür kommen vor allem ein Luftdruck in der Umgebung des Verbrennungsmotors und/oder eine Lufttemperatur in der Umgebung des Kraftfahrzeugs in Frage. Auch diese Größen sind sowohl einer Modellbildung als auch einer Messung mit Hilfe von Sensoren zugänglich.

## Patentansprüche

1. Verfahren zum Ansteuern eines Stellgliedes (42) zur Einstellung eines Turbinenströmungsquerschnitts eines Turboladers (36) eines Ottomotors (10) in einem Kraftfahrzeug bei einem Wechsel der Last des Ottomotors (10) von einem kleineren Lastwert auf einen größeren Lastwert, **dadurch gekennzeichnet, dass** das Stellglied (42) zur Einstellung des für den größeren Lastwert einzustellenden Turbinenströmungsquerschnitts gegenüber dem Wechsel der Last verzögert angesteuert wird.

2. Verfahren nach Anspruch 1, **dadurch gekennzeichnet, dass** ein Ausmaß der Verzögerung (tv) in Abhängigkeit von wenigstens einem Betriebsparameter des Ottomotors (10) vorgegeben wird.

3. Verfahren nach Anspruch 2, **dadurch gekennzeichnet, dass** der wenigstens eine Betriebsparameter eine Drehzahl des Ottomotors bei dem Wechsel der Last ist.

4. Verfahren nach Anspruch 3, **dadurch gekennzeichnet, dass** das Ausmaß der Verzögerung (tv) bei einem kleineren Wert der Drehzahl (n) größer als bei einem größeren Wert der Drehzahl (n) ist.

5. Verfahren nach einem der Ansprüche 3 oder 4, **dadurch gekennzeichnet, dass** ein weiterer Betriebsparameter eine Last des Ottomotors ist vor einem Wechsel der Last ist.

6. Verfahren nach einem der Ansprüche 3 bis 5, **dadurch gekennzeichnet, dass** ein weiterer Betriebsparameter eine Abgastemperatur des Ottomotors bei einem Wechsel der Last ist.

7. Verfahren nach einem der vorhergehenden Ansprüche, **dadurch gekennzeichnet, dass** der Betriebsparameter ein von der Umgebung des Ottomotors abhängiger Betriebsparameter ist.

8. Verfahren nach Anspruch 7, **dadurch gekennzeichnet**, der Betriebsparameter ein Luftdruck der Umgebung des Ottomotors ist.

9. Verfahren nach Anspruch 8, **dadurch gekennzeichnet, dass** der Betriebsparameter eine Lufttemperatur in der Umgebung des Kraftfahrzeugs ist.

10. Steuergerät (52), das dazu eingerichtet ist, ein Stellglied (42) zur Einstellung eines Turbinenströmungsquerschnitts eines Turboladers (36) eines Ottomotors (10) in einem Kraftfahrzeug bei einem Wechsel der Last des Ottomotors (10) von einem kleineren Lastwert auf einen größeren Lastwert anzusteuern, **dadurch gekennzeichnet, dass** das Steuergerät (52) dazu eingerichtet ist, das Stellglied (42) zur Einstellung des für den größeren Lastwert einzustellenden Turbinenströmungsquerschnitts gegenüber dem Wechsel der Last verzögert anzusteuern.

11. Steuergerät (52) nach Anspruch 10, **dadurch gekennzeichnet, dass** es dazu eingerichtet ist, den Ablauf eines der Verfahren nach den Ansprüchen 2 bis 9 zu steuern.
